# EUROPEAN PATENT APPLICATION

(11) **EP 2 985 181 A1**
(43) Date of publication of application: **17.02.2016**
(21) Application number: 15180593.4
(22) Date of filing: 11.08.2015
(51) Int. Cl.: B60Q 1/26, B60Q 1/44

(54) **VEHICLE DECELERATION WARNING SYSTEM**

(30) Priority: 14.08.2014 US 201414460033
(71) Applicant: Deere & Company, Moline, IL 61265-8098 (US)
(72) Inventor: Steege, Scott C, Denver, IA Iowa 50622 (US); Boden, Shane M, Lawrence, 66049 (US)
(74) Representative: Dehnhardt, Florian Christopher

(57) **Abstract**

A vehicle deceleration warning system (10) comprises a wheel speed sensor (22) for generating a wheel speed signal and an indicator light (32). An electronic control unit (30) receives the wheel speed signal and controls activation of the indicator light (32). The electronic control unit (30) activates the indicator light (32) when the wheel speed signal represents deceleration of the vehicle.

## Description

The present invention relates to a vehicle deceleration warning system.

Off-road vehicles, such as agricultural tractors, are also operated on roads and highways. It is known to activate brake lights using a sensor on brake pedals to sense when the brake pedals have been displaced from a neutral position. However, an operator can slow down such a vehicle without using the brakes. When an agricultural tractor is operated in this manner, the brake lights will not be illuminated to signal to rear approaching vehicles that the agricultural tractor is slowing or stopping. It is desired to provide such vehicles with a system for signaling deceleration, even when the brakes are not being activated.

This and other objects are achieved by the present invention, wherein a vehicle deceleration warning system is provided. The vehicle deceleration warning system comprises a wheel speed sensor for generating a wheel speed signal and an indicator light. An electronic control unit receives the wheel speed signal and controls activation of the indicator light. The electronic control unit activates the indicator light when the wheel speed signal represents deceleration of the vehicle.

For a complete understanding of the objects, techniques, and structure of the invention reference should be made to the following detailed description and accompanying drawings:
- Fig. 1: is a schematic diagram of a vehicle deceleration warning system embodying the invention,
- Fig. 2: is a diagram illustrating the functions performed by an ECU of the vehicle deceleration warning system of Fig. 1.

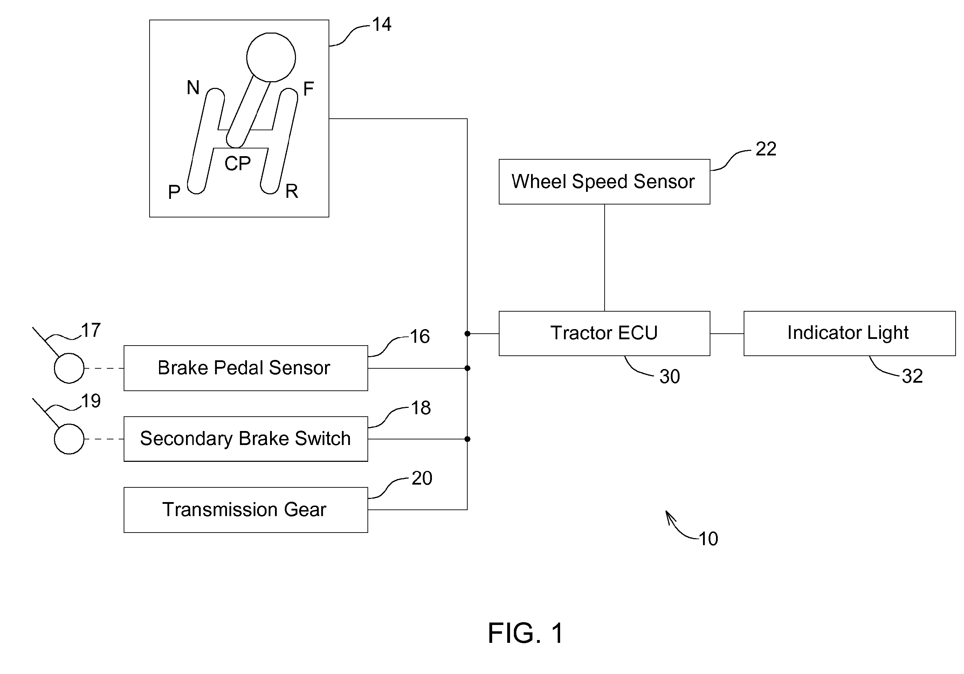

Referring to Fig. 1, the vehicle deceleration warning system 10 includes a transmission shift position sensor 14, a primary brake pedal activation sensor 16 operatively coupled to a primary brake pedal 17, a secondary brake switch activation sensor 18 operatively coupled to a secondary brake lever 19, a transmission gear sensor 20 and a vehicle or wheel speed sensor 22. A transmission gear signal may be provided by a transmission controller (not shown). Vehicle acceleration is calculated based on wheel speed change over time.

Signals from sensors 14, 16, 18, 19, 20, 22 are received by a microprocessor-based electronic control unit (ECU) 30. The ECU 30 is connected to an indicator light 32, which could be a brake light or a lamp separate from a brake light. The indicator light 32 could be a lamp at the top center of a cab (not shown) in order to improve visibility, since an implement could interfere with visibility of standard tractor brake lights. The ECU 30 controls activation of the indicator light 32 as a function of the signals from the sensors 14, 16, 18, 19, 20, 22.

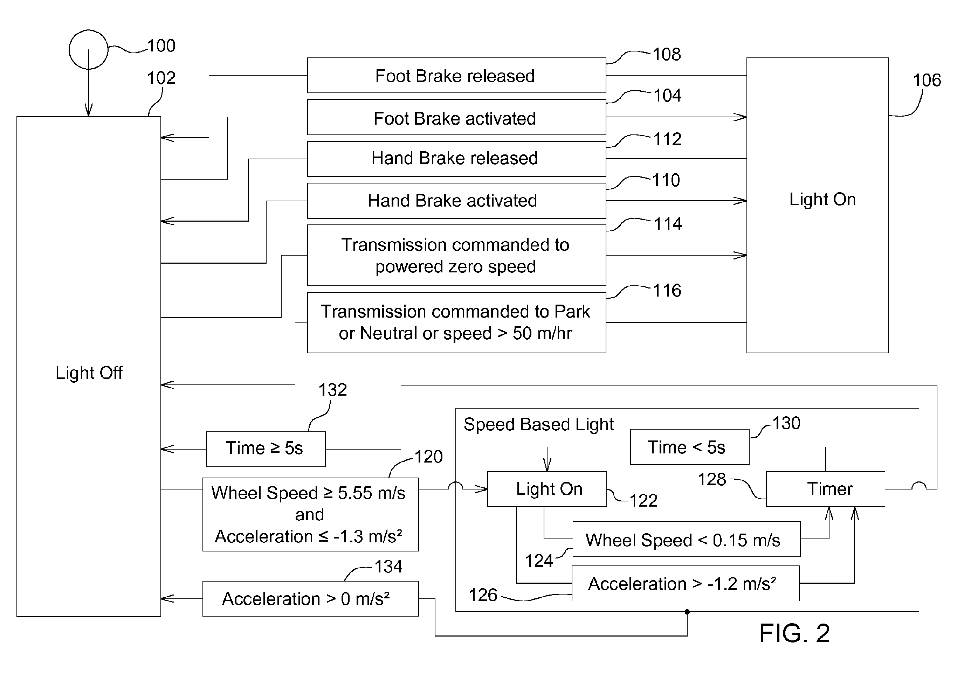

The ECU 30 thereby processes the signals from the sensors 14, 16, 18, 19, 20, 22 and controls activation of the indicator light 32 as indicated by the diagram of Fig. 2. The conversion of the diagram of Fig. 2 into a standard language for implementing the algorithm described by the flow chart in a digital computer or microprocessor of ECU 30 will be evident to one with ordinary skill in the art.

Following initialization at block 100, the indicator light 32 will be turned off as indicated by block 102.

If the primary brake pedal 17 is activated (block 104), then the indicator light 32 will be turned on as indicated by block 106.

If the indicator light 32 is on and the primary brake pedal 17 is de-activated (block 108), then the indicator light 32 will be turned off as indicated by block 102.

If the secondary brake lever 19 is activated (block 110), then the indicator light 32 will be turned on as indicated by block 106.

If the indicator light 32 is on and the secondary brake lever 19 is de-activated (block 112), then the indicator light 32 will be turned off by block 102.

If the transmission is commanded to powered zero speed (block 114), then the indicator light 32 will be turned on as indicated by block 106. A transmission is in a "powered zero" condition when the transmission has been put into a forward or reverse gear, but has zero speed.

If the indicator light 32 is on and transmission is commanded to Park or Neutral or wheel speed is less than 50 meters per hour (block 116), then the indicator light 32 will be turned on by block 102.

Returning to block 102, if the indicator light 32 is off and wheel speed is greater than or equal to a threshold speed such as 5.55 meters per second and acceleration is less than or equal to an acceleration threshold such as -1.3 m/sec² (block 120), then the indicator light 32 will be turned on as indicated by block 122. As a result, the indicator light 32 will turn on if deceleration is high only about a speed threshold of about 20 kph.

If the indicator light 32 is on as a result of block 122 and wheel speed is less than a speed threshold of 0.15 m/sec (block 124) or if acceleration is greater than an acceleration threshold such as -1.2 m/sec² (block 126), then a timer (blocks 128, 130) will hold the indicator light 32 on for a desired time period such as 5 seconds. When the timer period has elapsed (block 132), then the indicator light 32 will be turned off (block 102).

If acceleration is greater than a threshold such as 0 m/sec (block 134), then the indicator light 32 will be turned off (block 102). This occurs without any time delay so that the indicator light is immediately turned off if the vehicle accelerates.

The result is a vehicle deceleration warning system 10 which controls a brake light or an indicator light as a function of vehicle deceleration and as a function of normal service brake pedal or secondary brake lever operation. Different deceleration rates and thresholds may be used for different transmission combinations including, infinitely variable, power shift, as well as others.

Thus, the ECU 30 analyzes operator inputs and vehicle conditions, and determines the status of service brakes, secondary brakes, transmission powered zero condition, or if the agricultural tractor is decelerating due to hand throttle position, foot throttle position, or if transmission speed decreasing (due to gear change, or transmission control pulled rearward to slowdown). The ECU 30 illuminates an indicator light or brake light when the service brake or secondary brake is actuated, and turns it off when these inputs return to a neutral state. The indicator light 32 will also be illuminated when the ECU 30 determines the vehicle has exceeded a minimum velocity threshold (indicating a transport condition) and is decelerating at a rate that crosses a predetermined value, and illumination will be maintained for fixed amount of time after the deceleration has been halted.

The indicator light 32 will be illuminated when the transmission is put into a "powered zero" condition. This condition may occur when the vehicle is at a stoplight, stop sign or intersection, but the operator is not using the service brake nor secondary brake to keep the vehicle from moving. In this case the vehicle deceleration warning system 10 generates a warning signal to rearward approaching vehicles that the vehicle is slowing or stopped.

## Claims

1. A vehicle deceleration warning system, comprising a wheel speed sensor (22) for generating a wheel speed signal; an indicator light (32); and an electronic control unit (30) which receives the wheel speed signal and controls activation of the indicator light (32), the electronic control unit (30) activating the indicator light (32) when the wheel speed signal represents deceleration of the vehicle.

2. The vehicle deceleration warning system according to claim 1, **characterized in that** the indicator light (32) comprises a brake light.

3. The vehicle deceleration warning system according to claim 1 or 2, **characterized in that** the electronic control unit (30) turns the indicator light (32) on if a transmission of the vehicle is commanded to a powered zero speed condition.

4. The vehicle deceleration warning system according to at least one of claims 1 to 3, **characterized in that** the electronic control unit (30) turns the indicator light (32) off if a transmission of the vehicle is commanded to Park or Neutral condition.

5. The vehicle deceleration warning system according to at least on of claims 1 to 4, **characterized in that** the electronic control unit (30) turns the indicator light (32) off if wheel speed exceeds a speed threshold.

6. The vehicle deceleration warning system according to at least one of claims 1 to 5, **characterized in that** the electronic control unit (30) turns the indicator light (32) on if wheel speed is greater than a first speed threshold and vehicle acceleration is less than a first acceleration threshold.

7. The vehicle deceleration warning system according to claim 6, **characterized in that** the electronic control unit (30) turns the indicator light (32) off after a predetermined time period if vehicle acceleration is greater than a second acceleration threshold.

8. The vehicle deceleration warning system according to claim 6, **characterized in that** the electronic control unit (30) turns the indicator light (32) off immediately if vehicle acceleration is greater than zero.

9. The vehicle deceleration warning system according to at least one of claims 1 to 8, **characterized in that** the electronic control unit (30) turns the indicator light (32) on if a primary brake pedal (17) and/or a secondary brake lever (19) is activated, and the electronic control unit (30) turns the indicator light (32) off if the primary brake pedal (17) and/or the secondary brake lever (19) is de-activated.
